## Europäisches Patentamt
## European Patent Office
## Office européen des brevets

(19)

(11) Veröffentlichungsnummer: **0 030 689**
**B1**

(12)

# EUROPÄISCHE PATENTSCHRIFT

(45) Veröffentlichungstag der Patentschrift:
**02.03.83**

(51) Int. Cl.³: **H 01 G 4/30**, H 01 G 4/32

(21) Anmeldenummer: **80107649.8**

(22) Anmeldetag: **05.12.80**

(54) **Elektrischer Wickel- oder Stapelkondensator.**

(30) Priorität: **14.12.79 DE 7935204 U**

(43) Veröffentlichungstag der Anmeldung:
**24.06.81 Patentblatt 81/25**

(45) Bekanntmachung des Hinweises auf die Patenterteilung:
**02.03.83 Patentblatt 83/9**

(84) Benannte Vertragsstaaten:
**AT BE CH DE FR GB IT LI NL SE**

(56) Entgegenhaltungen:
**DE-B-1 163 971**
**US-A-3 649 892**

(73) Patentinhaber: **HOECHST AKTIENGESELLSCHAFT,
Postfach 80 03 20, D-6230 Frankfurt/Main 80 (DE)**

(72) Erfinder: **Grosse-Kreul, Theo, Buchenweg 15,
D-6200 Wiesbaden (DE)**
Erfinder: **Holst, Arno, Dr., Drususstrasse 3,
D-6200 Wiesbaden (DE)**
Erfinder: **Brandt, Lothar, Dr.,
Alfred-Schumann-Strasse 23, D-6200 Wiesbaden (DE)**

## Elektrischer Wickel- oder Stapelkondensator

Die Erfindung bezieht sich auf einen Kondensator von der im Oberbegriff des Anspruchs 1 genannten Art.

Kondensatoren dieser Art bestehen gewöhnlich aus einem Wickel oder Stapel von streckorientierter Polypropylen-, Polyester- oder Polycarbonatfolie. Auch sind Folien aus fluorierten Kunststoffen, Polystyrol oder Polysulfon für diesen Zweck im Einsatz. Die Metallschichten bestehen üblicherweise aus band- oder blattförmigen Folien oder sind dünne Schichten, die im Vakuum auf die Kunststoffolie aufgedampft sind. Als Metall wird meistens Aluminium verwendet, doch sind für bestimmte Anwendungen z. B. auch Zink, Kupfer oder Gold als Elektrodenschichten bekannt. Die Stirnkontaktschichten sind gewöhnlich poröse metallische Schichten und bestehen aus lötfähigem Material, beispielsweise aus Zink oder Zink-Zinn-Legierungen.

Die Freirandzonen sind metallfreie Streifen an der Stirnfläche des Wickels oder Stapels. Sie erstrecken sich zwischen den Stirnkontaktschichten und den Rändern der Metallschichten und enthalten meistens eine Schicht aus isolierendem Material, z. B. aus Harz, Wachs oder Öl. Diese Schichten haben die Aufgabe, die an den Rändern der Metallschichten nachteiligerweise vorhandenen inhomogenen Feldverteilungen zu beseitigen oder zumindest zu verbessern. Inhomogene Feldverteilungen ergeben relativ hohe elektrische Feldkonzentrationen, die zu Entladungen in der Freirandzone führen können und somit die Lebensdauer des Kondensators herabsetzen.

Die bekannten Schichten aus isolierendem Material in den Freirandzonen zeigen jedoch verschiedene Nachteile. So besteht Gefahr, daß dieses Material das Dielektrikum negativ beeinflußt, indem es beispielsweise in die Kunststoffolie diffundiert und sie zum Quellen bringt. Durch diese Dimensionsänderung des Wickels oder Stapels werden die Kontaktstellen zwischen Stirnkontaktschichten und Metallschichten des Wickels oder Stapels mechanisch stark belastet, so daß dieser Kontakt zumindest teilweise zerstört wird. Eine Abtrennung der Stirnkontaktschichten von den Metallschichten kann auch erfolgen, wenn das isolierende Material in den Freirandzonen während des bestimmungsgemäßen Gebrauchs des Kondensators seine räumliche Ausdehnung verändert.

Es ist somit Aufgabe der Erfindung einen Kondensator der eingangs genannten Art bezüglich der Freirandzone zu verbessern. Die Feldverteilung in diesem Bereich soll möglichst homogen sein, so daß die elektrische Belastbarkeit dieses Kondensators erhöht werden kann. Ferner soll das in der Freirandzone vorhandene isolierende Material nicht mit dem Dielektrikum reagieren, d. h. die Kunststoffolien nicht in negativer Weise verändern.

Diese Aufgabe wird gelöst durch die im kennzeichnenden Teil des Anspruchs 1 genannten Merkmale. Die Unteransprüche 2 und 3 beschreiben besonders vorteilhafte Ausführungsformen der in den Freirandzonen vorhandenen Schichten.

Unter Kunststoffolien sind die üblichen Kondensatorfolien zu verstehen, z. B. Polypropylenfolien einer Dicke von 4 bis 15 μm, Polyesterfolien einer Dicke von 1,5 bis 30 μm und Polycarbonatfolien einer Dicke von 1,5 bis 15 μm. Die aufgedampfte Aluminiumschicht hat eine Dicke von kleiner als 1 μm, zweckmäßigerweise etwa 20 nm.

In den Freirandzonen befinden sich als isolierendes Material Cyanalkylether von Alkoholen und/oder Polyolen, insbesondere Cyanethylether von Kohlenhydraten und/oder deren Derivaten. Besonders vorteilhaft ist bzw. enthält das isolierende Material Cyanethylether von Saccharose, Stärke und/oder Cellulose. Diese Verbindungen sind an sich bekannt und werden beispielsweise in der DE-B-1 244 758 beschrieben. Hochsubstituierte Cyanethylether von Polyolen, wie z. B. Cyanethylsaccharose mit einem Stickstoffgehalt von größer oder gleich 12%, Cyanethylsorbit oder Tris-cyanmethylglycerin, zeigen in einem weiten Temperaturbereich, insbesondere zwischen 0 und 100° C, sirupöse bis flüssige Konsistenz.

Die Herstellung des Kondensators erfolgt auf übliche Weise, zunächst durch Bildung eines Wickels oder Stapels aus Dielektrikums- und Elektrodenschichten und anschließendes Aufbringen der porösen Stirnkontaktschichten. Zur Ausfüllung der Freirandzonen wird der Wickel oder Stapel zunächst entgast. Anschließend wird das isolierende viskose oder flüssige Material bei erhöhter Temperatur auf die poröse Stirnkontaktschicht aufgebracht; von dort diffundiert es in die Freirandzonen.

Bei Verwendung von Kondensatorfolien mit rauher, geprägter oder gewellter Oberflächenstruktur vermag der Cyanalkylether zwischen die benachbarten Lagen des Wickels bzw. Stapels einzudringen.

Im üblichen Betriebstemperaturbereich bleibt die isolierende Schicht gemäß der Erfindung vorteilhafterweise hochviskos bzw. flüssig. Durch diese isolierende Schicht, insbesondere bei Verwendung von Cyanethylsaccharose, sind die Freirandzonen höher elektrisch belastbar.

Besonders vorteilhaft ist ein Kondensator mit Cyanethylsaccharose in den Freirandzonen und orientierten, insbesondere rauhe Oberflächen aufweisenden Polypropylenfolien als Dielektrikum mit aufgedampfter Aluminiumschicht als Elektroden. Dieser hochbelastbare Kondensator ist noch für Wechselspannungen von über 500 Volt (50 Hz) geeignet. Es erfolgt keine negative Beeinflussung der Polypropylenfolien durch das isolierende Material der Freirandzone, ihre mechanischen und physikalischen Eigenschaften bleiben unverändert. Cyanethylsaccharose ist als isolierendes Material wegen der Gasfestigkeit und thermischen Stabilität besonders gut geeignet.

Das isolierende Material im Kondensator der Erfindung kann neben dem Cyanalkylether inertes Material enthalten, z. B. fein pulverisierte Stoffe oder inerte Flüssigkeiten.

Die vorliegende Erfindung wird an Hand einer Figur näher erläutert.

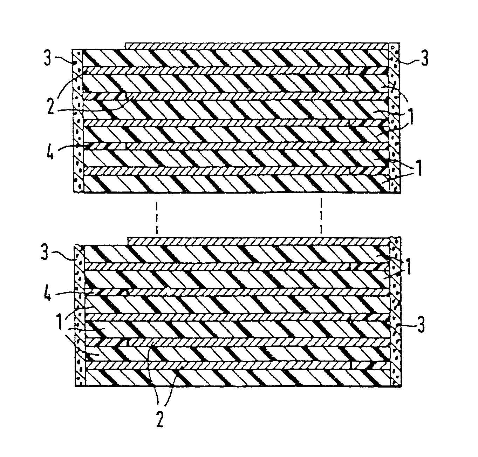

Die Figur zeigt die Schichtenfolge in einem Wickel- oder Stapelkondensator im Schnitt. Sie ist nicht maßstabsgetreu. Der Kondensator besteht aus Kunststoffolien 1 und aufgedampften Metallschichten 2. Die Stirnkontaktschichten 3 und die Ränder der Metallschichten 2 begrenzen die Freirandzonen 4, die mit isolierendem Material gefüllt sind, welches Cyanalkylether von Alkoholen und/oder Polyolen enthält.

## Patentansprüche

1. Elektrischer Wickel- oder Stapelkondensator, insbesondere geeignet für Wechselspannung, bestehend aus

a) einem Wickel oder Stapel von mehreren aufeinanderfolgenden Lagen (1) von band- oder blattförmigen flexiblen streckorientierten Kunststoffolien als Dielektrikum,

b) zwischen den Kunststoffolien angeordneten, seitlich zueinander versetzten Metallschichten (2) als Elektroden, die abwechselnd an eine der beiden Stirnseiten des Wickels oder Stapels reichen und jeweils von der anderen Stirnseite des Wickels oder Stapels beabstandet sind,

c) zumindest die beiden einander gegenüberliegenden Stirnseiten des Wickels oder Stapels kontaktierenden Stirnkontaktschichten (3),

d) Schichten aus isolierendem Material in den Freirandzonen (4) zwischen den Stirnkontaktschichten (3) und den Rändern der Metallschichten (2),

dadurch gekennzeichnet, daß die in den Freirandzonen (4) vorhandenen Schichten Cyanalkylether von Alkoholen und/oder Polyolen enthalten.

2. Kondensator nach Anspruch 1, dadurch gekennzeichnet, daß die Freirandzonen Cyanethylether, insbesondere von Kohlenhydraten und/oder deren Derivaten enthalten.

3. Kondensator nach Anspruch 2, dadurch gekennzeichnet, daß die Freirandzonen Cyanethylether von Saccharose, Stärke und/oder Cellulose enthalten.

## Claims

1. An electric roll-type or multi-layer plate capacitor which is especially suitable for a.c. voltage, comprising

a) a roll or stack of several successive layers (1) of web or sheet-shaped flexible, stretch-oriented plastic films serving as the dielektric,

b) laterally staggered metal layers (2) serving as the electrodes, which are arranged between the plastic films and alternately extend up to one of the end faces of the roll or stack, while being, at the same time, spaced from the other end face of the roll or stack,

c) end contact layers (3) which at least contact the two opposite end faces of the roll or stack, and

d) layers of an insulating material which form the non-metallized portions (4) between the end contact layers (3) and the borders of the metal layers (2),

wherein the layers forming the non-metallized portions (4) contain cyanoalkyl ethers form alcohols and/or polyols.

2. A capacitor as claimed in claim 1, wherein the non-metallized portions contain cyanoethyl ethers, particularly from carbohydrates and/or the derivatives thereof.

3. A capacitor as claimed in claim 2, wherein the non-metallized portions contain cyanonethyl ethers form saccharose, starch and/or cellulose.

## Revendications

1. Condensateur électrique bobiné ou empilé convenant particulièrement à une tension alternative, qui comprend:

a) un enroulement ou un empilage de plusieurs couches (1) superposées de feuilles de matière plastique souples et orientées, en forme de bandes ou de plaques, qui constituent le diélectrique;

b) des couches métalliques (2), intercalées comme électrodes entre les feuilles de matière plastique et décalées latéralement les unes par rapport aux autres, qui atteignent alternativement l'un des deux côtés frontaux de l'enroulement ou de l'empilage et s'arrêtent chaque fois à une certaine distance de l'autre côté de l'enroulement ou de l'empilage;

c) des couches de contact frontales (3) en contact au moins avec les deux côtés opposés de l'enroulement ou de l'empilage et;

d) des couches de matériau isolant dans les zones de bords libres (4) entre les couches de contact frontales (3) et les bords des couches métalliques (2);

caractérisé en ce que les couches qui se trouvent dans les zones des bords libres (4) contiennent des cyanalcoyléthers d'alcools et/ou de polyols.

2. Condensateur selon la revendication 1, caractérisé en ce que les zones des bords libres contiennent des cyanéthyléthers, notamment d'hydrates de carbone et/ou de leurs dérivés.

3. Condensateur selon la revendication 2, caractérisé en ce que les zones des bords libres contiennent des cyanéthyléthers de saccharose, d'amidon et/ou de cellulose.

4